# EUROPÄISCHE PATENTSCHRIFT

(11) **EP 0 490 084 B1**
(45) Veröffentlichungstag und Bekanntmachung des Hinweises auf die Patenterteilung: **07.06.1995**
(21) Anmeldenummer: 91119027.0
(22) Anmeldetag: 07.11.1991
(51) Int. Cl.: B65B 21/18, B65G 47/90

(54) **Vorrichtung zum Ein- oder Auspacken von Behältern**
Device for packaging or unpacking containers
Dispositif pour l'emballage ou le déballage de récipients

(30) Priorität: 13.11.1990 DE 4036038; 02.08.1991 DE 4125573
(43) Veröffentlichungstag der Anmeldung: 17.06.1992
(73) Patentinhaber: Kronseder, Hermann, D-93086 Wörth (DE)
(72) Erfinder: Kronseder, Hermann, D-93086 Wörth (DE)
(74) Vertreter: Grünecker, Kinkeldey, Stockmair & Schwanhäusser Anwaltssozietät

(56) Entgegenhaltungen:
- EP-A- 0 240 117
- WO-A-92/02416
- DE-A- 1 756 922
- DE-A- 3 333 301
- DE-B- 1 079 535
- US-A- 4 055 943
- US-A- 4 441 852

## Beschreibung

Die Erfindung betrifft eine Vorrichtung zum gruppenweisen Ein- oder Auspacken von Behältern in bzw. aus Trägerkästen, mit einem um eine im wesentlichen horizontale Achse drehbaren Rotationselement, an dem an drehachsenfernen Stellen Behältergreiferköpfe zum wiederholten Durchlaufen einer geschlossenen, eine Zugriffsposition und eine Grifflöseposition enthaltenden Bann angebracht sind.

Vorrichtungen dieser Art werden vorzugsweise in der Getränkeindustrie zum Verpacken von Flaschen in Trägerkästen oder zum Entladen der Trägerkästen eingesetzt. Dabei kommt es darauf an, daß trotz möglichst hoher Packleistungen, die mit hohen Beförderungsgeschwindigkeiten und folglich hohen, auf die Flaschen einwirkenden Beschleunigungs- und Bremskräften verbunden sind, eine schonende Behandlung der Flaschen und Kästen erfolgt. Insbesondere muß verhindert werden, daß es durch häufigen Flaschenbruch zu Störungen des Betriebs kommt.

Eine Vorrichtung zum Verpacken von Behältern der eingangs erwähnten Art ist aus der DE-B-10 87 967 bekannt. Bei dieser Vorrichtung können drei an dem Rotationselement in der Art einer Gondel aufgehängte Greifköpfe in einer vertikalen Ebene bewegt werden, wobei die Greifköpfe an von dem Rotationselement seitlich vorstehenden Schienen oder Schwenkarmen derart aufgehängt sind, daß zusätzlich zur Bewegung in einer vertikalen Ebene auch eine horizontale Bewegung der Greifköpfe erfolgen kann. Eine Zugriffsposition und eine Grifflöseposition ergibt sich jeweils etwa in der am weitesten abgesenkten Stellung der Greifköpfe. Um zum Beispiel Flaschen in einen Trägerkasten zu laden, greift ein Greifkopf in seiner am weitesten abgesenkten Position auf in diese Zugriffsposition angeförderte Flaschen zu. Während einer vollen Umdrehung des Rotationselements erfolgt eine horizontale Verschiebung des betreffenden Greifkopfes, so daß der Greifkopf über einer zur Flaschenanförderungsbahn benachbarten Bann positioniert wird, auf der ein zu füllender Trägerkasten antransportiert wird. Damit der Greifkopf, der seine Flaschen in den Trägerkasten abgestellt hat, wieder neue Flaschen aufnehmen kann, muß er einen weiteren Umlauf um 360^{o} durchführen, während der eine horizontale Rückverschiebung und Ausrichtung zu dem Förderband, das die Flaschen anliefert, erfolgt. Ein Nachteil dieser bekannten Vorrichtung zum Verpacken von Behältern besteht darin, daß die Packfrequenz dadurch beeinträchtigt ist, daß ein vollständiger Umlauf des leeren Greifkopfs erforderlich ist, um eine Neubeschickung des Greifkopfs mit Flaschen durchführen zu können. Da nur in der am weitesten abgesenkten Stellung der Greifköpfe eine Zugriffs- bzw. Grifflösepositionen möglich ist, sind zwei nebeneinanderliegende Förderbahnen für Flaschen bzw. Kästen erforderlich, wodurch sich für die Vorrichtung ein großer Platzbedarf ergibt. Schließlich ist es bei der bekannten Vorrichtung auch noch notwendig, die Bewegung der zu füllenden Kästen und der von den Greifköpfen transportierten Flaschen derart genau aufeinander abzustimmen, daß ein problemloses Einfädeln der Flaschen in Fächer der Trägerkästen erfolgen kann.

Es ist die Aufgabe der vorliegenden Erfindung, eine Vorrichtung der eingangs erwähnten Art vorzuschlagen, die gegenüber der aus dem Stand der Technik bekannten Vorrichtung dieser Art verbessert ist.

Erfindungsgemäß wird diese Aufgabe dadurch gelöst, daß die Behältergreiferköpfe mit dem Rotationselement jeweils über eine Relativbewegungen des Greiferkopfes gegen das Rotationselement in einer im wesentlichen vertikalen Ebene gestattende Aufhängung verbunden sind und eine Antriebs- und Steuereinrichtung zum Verschwenken der Greiferköpfe relativ zum Rotationselement unter Erzeugung der Bahn in einer gewünschten Form vorgesehen ist.

Durch diese erfindungsgemäße Lösung ist es möglich, geeignete Bahnen der Greiferköpfe derart zu erzeugen, daß ein Behältertransfer zwischen übereinander angeordneten Bahnen für den Antransport von Behältern bzw. Kästen erfolgen kann. Damit ist der Platzbedarf der erfindungsgemäßen Vorrichtung erheblich verringert. Das Aufnehmen von Flaschen durch den Greiferkopf und das Abgeben der Flaschen unter Absenkung in einen Kasten erfolgt während einer einzigen Drehung des Rotationselements, so daß gegenüber der aus dem Stand der Technik bekannten Vorrichtung, bei der zur Aufnahme und Abgabe eines Flaschensatzes zwei volle Drehungen des Rotationselements erforderlich waren, eine merklich erhöhte Packleistung erreicht wird. Schließlich läßt sich mit der erfindungsgemäßen Vorrichtung eine Bahnkurve derart erzeugen, daß in der Zugriffsposition und der Grifflöseposition des Greiferkopfes sowohl die Vertikal- als auch die Horizontalgeschwindigkeit des Greiferkopfes stark herabgemindert ist, und eine Vertikalbewegung so erfolgt, daß keine besondere Steuerung der Bewegung der Kästen oder der angelieferten Flaschen erforderlich ist, um einen sicheren Zugriff oder eine sichere Ablage der Flaschen in den Kasten zu gewährleisten. Insbesondere ist es durch die erfindungsgemäße Lösung nicht erforderlich, die angelieferten Flaschen in Anpassung an die Umlaufgeschwindigkeit der Greiferköpfe zu beschleunigen und Gruppen zu verpackender Flaschen zu bilden. Vielmehr kann die Flaschenanlieferung kontinuierlich erfolgen, wobei der Greiferkopf jeweils die vordersten Flaschen der angeförderten Flaschenkolonne aufnimmt. In der Umgebung der Zugriffsposition bzw. Zugriffslöseposition kann insbesondere für eine Art Tauchbewegung des Greiferkopfes gesorgt werden, durch die es möglich ist, daß die Flaschen ohne größere Fallstrecke in die einzelnen Fächer eines Trägerkastens hinein abgesenkt werden können.

In vorteilhafter Ausgestaltung der Erfindung weist die Vorrichtung eine Einrichtung zur Parallelführung der Greiferköpfe in einer horizontalen Ausrichtung auf. Durch eine solche Parallelführung wird vorteilhaft verhindert, daß in der Art einer Gondel aufgehängte Greiferköpfe während des Packbetriebs in Schwingungen geraten können und dadurch ein Ergreifen der Flaschen bzw. geordnetes Absetzen der Flaschen in die Kästen nicht gewährleistet ist.

In einer bevorzugten Ausführungsform für die Erfindung ist als Aufhängung ein Lenkerelement vorgesehen und die Antriebs- und Steuereinrichtung umfaßt ein Rollensterngetriebe, wobei eine gewünschte Bahnkurve durch entsprechende Ausbildung der Zahnbahn des Rollensterngetriebes erzeugt wird. Dabei ist die Zahnbahn des Rollensterngetriebes feststehend, und in die Zahnbahn greift ein Rollenstern ein, der mit einer auf dem Rotationselement gelagerten Welle verbunden ist, die ihrerseits über ein Getriebe eine Welle antreibt, die mit einem Lenkerelement verbunden ist.

Vorzugsweise ist das Rotationselement als Drehscheibe vorgesehen, an der drei oder vier Greiferköpfe vorgesehen sind, wobei die jeweiligen Anlenkungspunkte des zugehörigen Lenkerelements an die Drehscheibe im gleichen Abstand zur Drehachse der Drehscheibe und untereinander im gleichen Winkelabstand angeordnet sind.

Bei einer weiteren bevorzugten Ausführungsform der Erfindung ist eine zwei Lenkerglieder umfassende Aufhängung vorgesehen, wobei eines der beiden Lenkerglieder ein in eine ortsfeste Kurvennut eingreifendes Nockenelement aufweist, und das andere Lenkerelement über ein zweigliedriges Hilfslenkergestänge mit dem Rotationselement verbunden ist. Eines der beiden Glieder des Hilfslenkergestänges ist mit einem Nockenelement versehen, das in eine zweite ortsfeste Kurvennut eingreift. Indem die Nockenelemente in den ortsfesten Nuten zwangsgeführt sind, wird eine Zusatzbewegung der Greiferköpfe zu der durch das Rotationselement gegebenen Umlaufbewegung erreicht. Durch die zweigliedrige Ausbildung der Aufhängung, ergeben sich erweiterte Variationsmöglichkeiten, um eine optimale Bahnkurve für die Greiferköpfe zu erzielen.

Weitere vorteilhafte Ausgestaltungsmöglichkeiten der Erfindung gehen aus den Unteransprüchen hervor.

Die Erfindung soll nun anhand von Ausführungsbeispielen und der sich auf diese Ausführungsbeispiele beziehenden Zeichnungen näher erläutert und beschrieben werden. Es zeigen:
- Fig.1: ein Ausführungsbeispiel einer erfindungsgemäßen Vorrichtung zum Verpacken von Behältern in einer Seitenansicht,
- Fig.2: das Ausführungsbeispiel gemäß der Fig. 1 in einer zu der Ansicht von Fig. 1 um 90^{o} verdrehten Seitenansicht,
- Fig.3: ein Ausführungsbeispiel für eine Antriebseinrichtung zum Antrieb eines Lenkerelements,
- Fig.4: ein Beispiel für eine Bahn, mit der sich ein Greiferkopf einer erfindungsgemäßen Vorrichtung bewegen kann,
- Fig.5: eine weiteres Ausführungsbeispiel für ein Rotationselement einer erfindungsgemäßen Vorrichtung,
- Fig.6: ein bei dem Ausführungsbeispiel gemäß der Fig. 5 verwendetes Antriebselement zur Bewegung der Greiferköpfe relativ zum Rotationselement,
- Fig.7: ein weiteres Ausführungsbeispiel für eine erfindungsgemäße Vorrichtung zum Verpacken von Behältern mit jeweils zwei Lenkerelemente umfassenden Aufhängungen für die Greiferköpfe.
- Fig. 8: einen Greiferkopf mit einer Einrichtung für die Erzeugung einer zusätzlichen Translationsbewegung des Greiferkopfes relativ zu seiner Aufhängung, und
- Fig. 9: eine Anschlageinrichtung für die Ausrichtung von durch die Greiferköpfe aufzunehmenden Behältern.

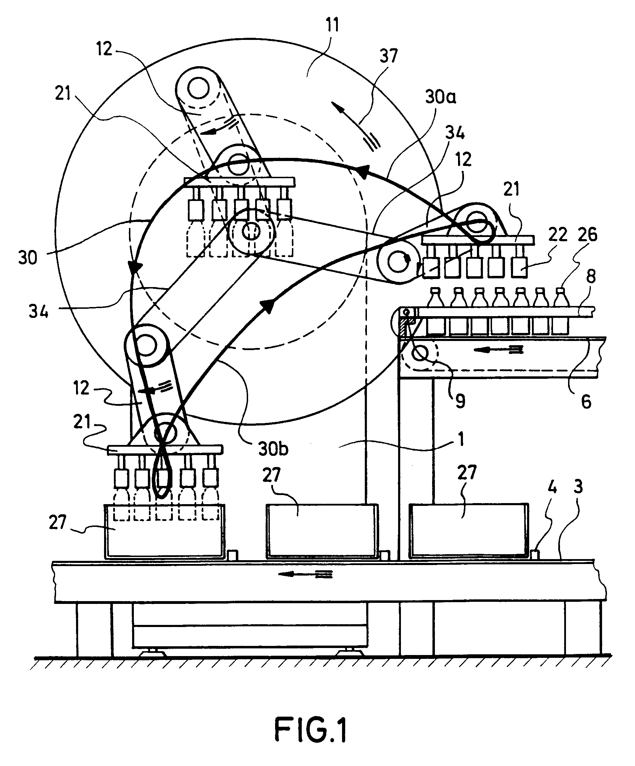

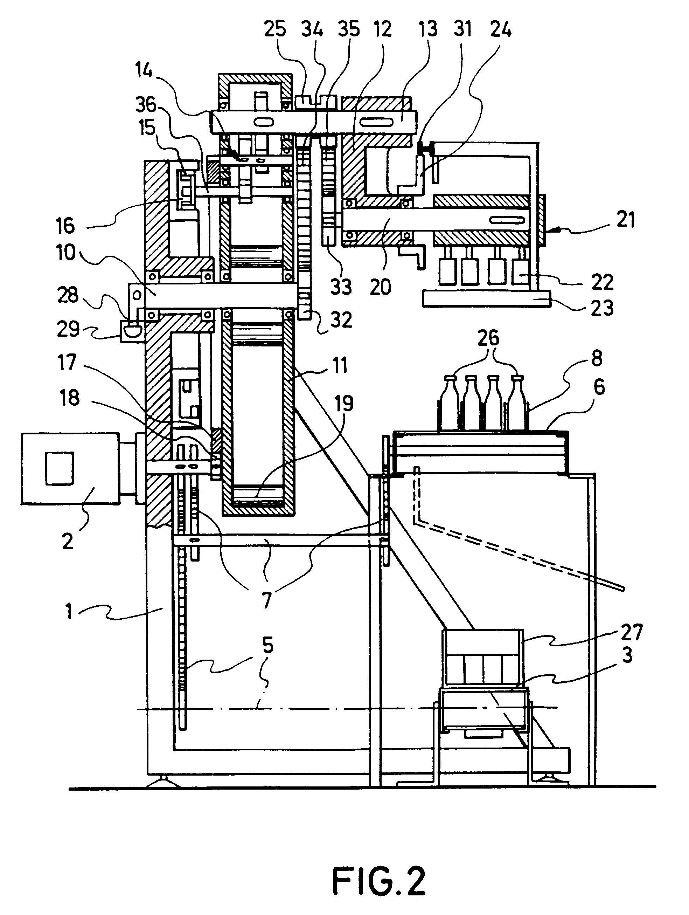

In den Fig. 1 und 2 ist mit dem Bezugszeichen 1 ein Grundrahmen bezeichnet, auf dem ein Rotor 11, drehbar auf einer feststehenden Achse 10, gehaltert ist. Die Achse 10 ist durch einen in einen Sicherheitsschalter 29 eingreifenden Nocken 28 gegen eine Verdrehung relativ zum Rahmen 1 gesichert. Der Rotor 11 ist in Form einer hohlen Drehscheibe ausgebildet, in deren Innenraum mehrere Getriebe angeordnet sind, von denen das Getriebe 14 gezeigt ist. Auf die Getriebe wird später noch näher eingegangen. Mit 19 ist ein Ölsumpf bezeichnet, der sich am unteren Ende des in dem Rotor 11 gebildeten Innenraums bildet. Der Rotor 11 ist durch eine Motorgetriebeeinheit 2 angetrieben, die ein Antriebsritzel 18 umfaßt, das in einen mit dem Rotor 11 verbunden Zahnkranz 17 eingreift. In dem Rotor sind jeweils im gleichem Abstand zur Drehachse und in gleichem Winkelabstand untereinander drei Wellen drehbar gelagert, von denen in der Fig. 2 die Welle 13 gezeigt ist. Mit den Wellen fest verbunden ist jeweils ein Lenkerelement 12, das an dem Ende gegenüber dem Verbindungsende zur Welle 13 an einen Greiferkopf 21 angelenkt ist. Der Greiferkopf 21 ist starr mit einer Welle 20 verbunden, die drehbar in dem Lenkerelement 12 gelagert ist. Der Greiferkopf 21 umfaßt im vorliegenden Ausführungsbeispiel pneumatisch betätigte Greifertulpen 22 und ist mit einem Zentrierrahmen 23 versehen, der relativ zum Greiferkopf 21, gesteuert durch eine Hubkurvenscheibe 24, vertikal verschiebbar ist. Die Hubkurvenscheibe 24 ist starr mit dem Lenkerelement 12 verbunden und auf der Hubkurvenscheibe rollt eine mit dem Zentrierrahmen 23 verbundene Rolle 31 ab.

Die feststehende Welle 10 ist starr mit einem Ritzel 32 verbunden, das über ein Kettenelement 34, zum Beispiel über einen Zahnriemen, ein Ritzel 25 antreibt, das auf der Achse 13 drehbeweglich angeordnet ist. Das Ritzel 25 ist als Doppelritzel ausgebildet und steht über ein weiteres Kettenelement 35 in Antriebsverbindung mit einem Ritzel 33, das mit der Welle 20 fest verbunden ist. Die Ritzel 32, 25 und 33 weisen übereinstimmende Zähnezahlen auf.

Entsprechend der Anzahl der Wellen 13 sind in dem Rotor 11 Wellen 36 gelagert, wobei zwischen den Wellen 36 und den Wellen 13 jeweils eine Antriebsverbindung durch ein Getriebe, wie das Getriebe 14, hergestellt ist. Die Wellen 36 sind starr mit einem Rollenstern 15 verbunden, der in eine ortsfeste Ringnut 16 eingreift, in der auf einer oder beiden Seitenwänden Zahnanordnungen für den Eingriff mit dem Rollenstern 15 vorgesehen sind.

Mit 7 ist eine Getriebeeinrichtung bezeichnet, durch die eine Antriebsverbindung zwischen der Motorgetriebeeinheit 2 und einem Flaschenförderer 6 hergestellt ist, auf dem Flaschen 26 zwischen Führungseinrichtungen 8 gegen einen feststehenden oder mitlaufenden Anschlag angefördert werden. Mit 5 ist eine ähnliche Getriebeeinrichtung zur Herstellung einer Antriebsverbindung zwischen der Motorgetriebeeinheit 2 und einem Förderer 3 mit Mitnehmern 4 für Kästen 27 bezeichnet.

Bei einer Drehung des Rotors 11 werden die Wellen 13 und 36 entsprechend ihrer Anordnung auf dem Rotor auf einer Kreisbahn umgeführt, wobei die Wellen 36 durch den Eingriff der mit ihnen starr verbundenen Rollensterne in die Zahnanordnungen in der Nut 16 entsprechend der Zahnanordnungen in Drehung versetzt werden. Diese Drehung wird jeweils über das Getriebe 14 auf die Welle 13 übertragen, so daß das mit den Wellen 13 starr verbundene Lenkerelement zusätzlich zur Drehbewegung entsprechend des Rotors 11 eine Bewegung in einer senkrechten Ebene relativ zum Rotor ausführt. Bei dem in den Fig. 1 und 2 gezeigten Ausführungsbeispiel sind die Zahnanordnungen in den Seitenwänden der Führungsnut 16 derart vorgesehen, daß sich für jeden Greiferkopf 21 die in der Fig. 1 gezeigte Bahn 30 ergibt.

Durch die Antriebsverbindung zwischen dem Ritzel 32 und dem Ritzel 33 über das Kettenelement 34, das Doppelritzel 25 und das Kettenelement 35 ist gewährleistet, daß jeder Greiferkopf bei der Drehung des Rotors 11 in konstanter Lage ausgerichtet bleibt, wobei die Vorrichtung so eingestellt ist, daß sämtliche Greiferköpfe unabhängig von ihrer Position auf der Bahn 30 in einer horizontalen Lage ausgerichtet sind. Entsprechend der konstanten horizontalen Lage der Greiferköpfe, durch die die gehalterten Flaschen stets senkrecht ausgerichtet sind, rollt bei einer Bewegung der Lenkerelemente 12 die Rolle 31 des Zentrierrahmens auf der mit dem Lankerelement verbundenen Kurvenscheibe 24 ab, so daß der Rahmen entsprechend der Form der Kurvenscheibe relativ zum Greiferkopf vertikal bewegt wird. Die Form der Kurvenscheibe 24 ist so vorgesehen, daß der Zentrierrahmen kurz vor dem Absenken von Flaschen in die Kästen nach unten bewegt wird, so daß die Kästen durch den Zentrierrahmen in eine definierte Position für das Absenken der Flaschen bringbar sind.

Durch entsprechende Zahnanordnungen der Zähne der Nut 16, kann eine Vielzahl verschiedener Bahnkurven erzeugt werden, wofür die in der Fig. 1 gezeigte Bahnkurve 30 ein Bespiel ist. Die Lenkerelemente 12 bewegen sich so relativ zur Drehscheibe, die sich stets in einer durch den Pfeil 37 in Fig. 1 angezeigten Richtung dreht, daß ein Greiferkopf 21, der gerade Flaschen 26 von dem Flaschenförderer 6 aufgenommen hat, auf einem durch eine Schwenkbewegung im entgegengesetzten Drehsinn zum Drehsinn des Rotors 11 erzeugten Bahnabschnitt 30a zu einem in einer geeigneten Position angeordneten Trägerkasten 27 bewegt wird. Unmittelbar über dem Trägerkasten 27 ist eine Schleifenbahn vorgesehen, wobei eine Eintauchbewegung des Greiferkopfs in Ben Kasten erfolgt, und die Flaschen von dem Greiferkopf behutsam, ohne aus größerer Höhe herabzufallen, in den Kasten abgesetzt werden können. Sowohl die horizontale als auch vertikale Geschwindigkeitskomponente des Greiferkopfes sind in diesem Bahnabschnitt stark herabgesetzt, während auf dem weitaus größten Teil der Bahnstrecke von der Zugriffsposition bis zur Grifflöseposition, um eine hohe Packfrequenz zu erreichen, der Flaschentransport mit höherer Geschwindigkeit erfolgen kann. Durch geeignete Steuerung der Bewegung der Lenkerelemente 12 kann dafür gesorgt werden, daß vor oder hinter der Zugriffs- bzw. Grifflöseposition keine zu hohen Beschleunigungs- bzw. Verzögerungswerte auftreten. Wenn ein Greiferkopf 21 seine Flaschen in einen Kasten abgesetzt hat, bewegt sich das Lenkerelement relativ zum Rotor derart, daß der Bahnabschnitt 30b erzeugt wird, wobei er sich weiter in einem Drehsinn entgegengesetzt zum Drehsinn des Rotors 11 dreht. Die Bahn 30b verläuft so, daß der Greiferkopf über den Anschlag 9 hinweg bewegt wird und anschließend, indem in der Bahn des Greiferkopfs wieder eine Schleife vorgesehen wird, eine Absenkung des Greiferkopfs zu den zu ergreifenden Flaschen 26 erfolgt. Auch während der Zugriffsphase auf die Flaschen sind sowohl die horizontale als auch vertikale Geschwindigkeitskomponente des Greiferkopfs gegenüber den sonstigen Bahnabschnitten stark vermindert. Nach Ergreifen der Flaschen wiederholt sich der beschriebene Bahndurchlauf.

Bei einer Umdrehung des Rotors 11 wird bei der in den Fig. 1 und 2 gezeigten Packvorrichtung jeweils durch jeden der drei Greiferköpfe 21 je ein Kasten 27 beladen, wodurch eine hohe Packfrequenz erzielt wird. Durch geeignete Bewegungen der Lenkerelememte 12 relativ zum Rotor 11 läßt sich der Packvorgang ohne hohe Beschleunigungs- und Verzögerungswerte und insbesondere ruckfrei gestalten, wodurch das Verpackungsgut und die Verpackungsbehälter geschont werden, was sich aber auch vorteilhaft in bezug auf den Veschleiß der Verpackungseinrichtung auswirkt.

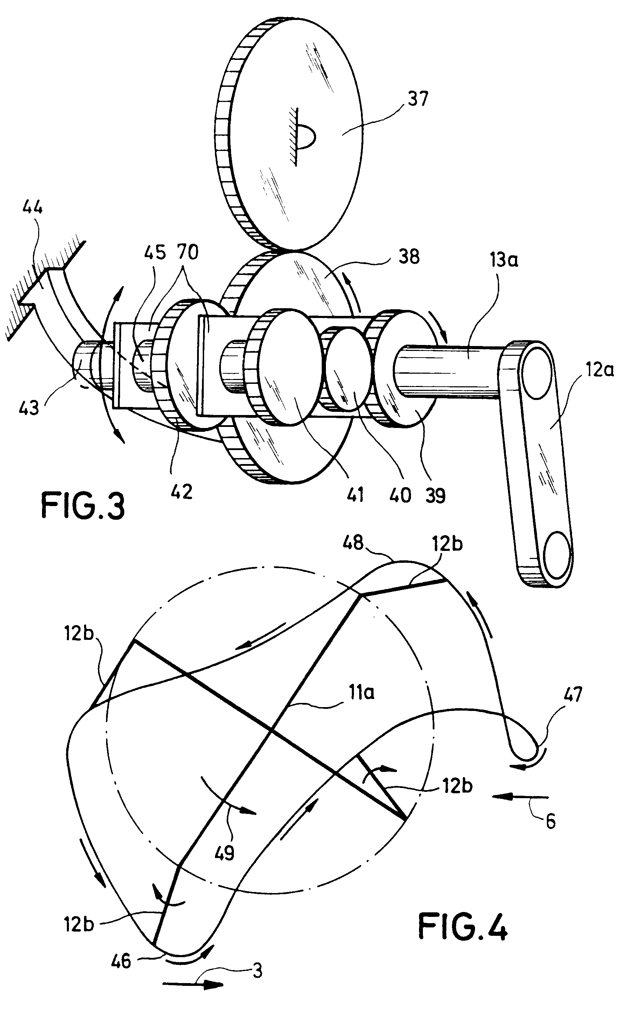

In der Fig. 3 ist eine Antriebseinrichtung für ein Lenkerelement 12a gezeigt, die anstelle der in den Fig. 1 und 2 gezeigten Antriebseinrichtung mit dem Getriebe 14 und dem Rollensterngetriebe verwendet werden könnte. Gleiche oder gleich wirkende Teile sind daher in der Fig. 3 mit den gleichen, mit einem Index a versehenen Bezugszahlen wie in den Fig. 1 und 2 bezeichnet.

Die Antriebseinrichtung von Fig. 3 umfaßt ein feststehendes Zahnrad 37, das in der in den Fig. 1 und 2 gezeigten Vorrichtung konzentrisch zu der Drehachse 10 anzuordnen wäre. Das feststehende Zahnrad 37 steht mit einem um eine Achse 13a, die auf einem in der Fig. 3 nicht gezeigten Rotor gelagert ist, drehbaren Zahnrad 38 im Eingriff, das seinerseits in ein Zahnnrad 42, das um eine Achse 45 drehbar und damit starr verbunden ist, eingreift. Ebenfalls starr verbunden mit der Achse 45 ist ein Zahnrad 41, das über ein Zwischenzahnrad 40 mit einem um die Achse 13a drehbaren Zahnrad im Antriebseingriff steht. Das Zahnrad 39 ist starr mit der Achse 13a verbunden, die ihrerseits starr mit dem Lenkerelement 12a verbunden ist. Das Zahnrad 39 und damit das Lankerelement 12a sind gegen das Zahnrad 38 verdrehbar. Die Achse 45 weist an ihrem dem Zahnrad 41 gegenüberliegenden Ende ein Nockenelement 43 in Form einer Rolle auf, die in eine Nut 44 eingreift. Die Nut 44 ist ortsfest wie die in den Fig. 1 und 2 gezeigte Nut 16 angeordnet, ist auch in sich geschlossen, weicht jedoch im Gegensatz zu der Nut 16 von einer kreisförmigen Umlaufführungsbahn ab. Die Achse 45 und das Zwischenzahnrad 40 sind drehbar in einer Schwinge 70 gelagert, die ihrerseits schwenkbar auf der Achse 13a gelagert ist.

Bei einer Drehung des (in der Fig. 3 nicht gezeigten Rotors) rollt das Zahnrad 38 unter Drehung auf dem Zahnrad 37 ab und treibt das Zahnrad 42 an, dessen Drehung über das Zahnrad 41 und das Zwischenzahnrad 40 auf das mit der Achse 13a und dem Lenkerelement 12a starr verbundene Zahnrad 39 übertragen wird. Während der Drehung des Rotors wird gleichzeitig die Rolle 43 innerhalb der Nut 44 zwangsgeführt, wobei sich eine Steuerung der Drehung der Welle 13a bzw. des Lenkerelements 12a dadurch ergibt, daß die Nut 44 von einer Kreisbahn abweicht und die gezeigte Getriebeanordnung wie ein Ausgleichsgetriebe wirkt.

Eine weitere mögliche Kurvenbahn für einen Greiferkopf ist in der Fig. 4 gezeigt. Diese Kurvenbahn könnte sowohl mit der in den Fig. 1 und 2 beschriebenen Antriebseinrichtung für die Lenkerelemente als auch mit der Einrichtung gemäß der Fig. 3 erzeugt werden. In der Fig. 4 ist ein Rotor 11a gezeigt, der zur Bewegung von vier Greiferköpfen über vier Lenkerelemente 12b vorgesehen ist. Mit 47 ist eine Flaschenzugriffsposition und mit 46 eine Grifflöseposition bezeichnet. Im Gegensatz zu der in der Fig.1 gezeigten Bahn ist an der Grifflöseposition keine Schleife vorgesehen. Wie bei der Bahnkurve gemäß Fig. 1 sind jedoch die Horizontalwie auch die Vertikalkomponente der Geschwindigkeit der Greiferköpfe in der Umgebung der Zugriffsposition und auch in der Umgebung der Grifflöseposition gegenüber dem Großteil der anderen Bahnabschnitte stark vermindert.

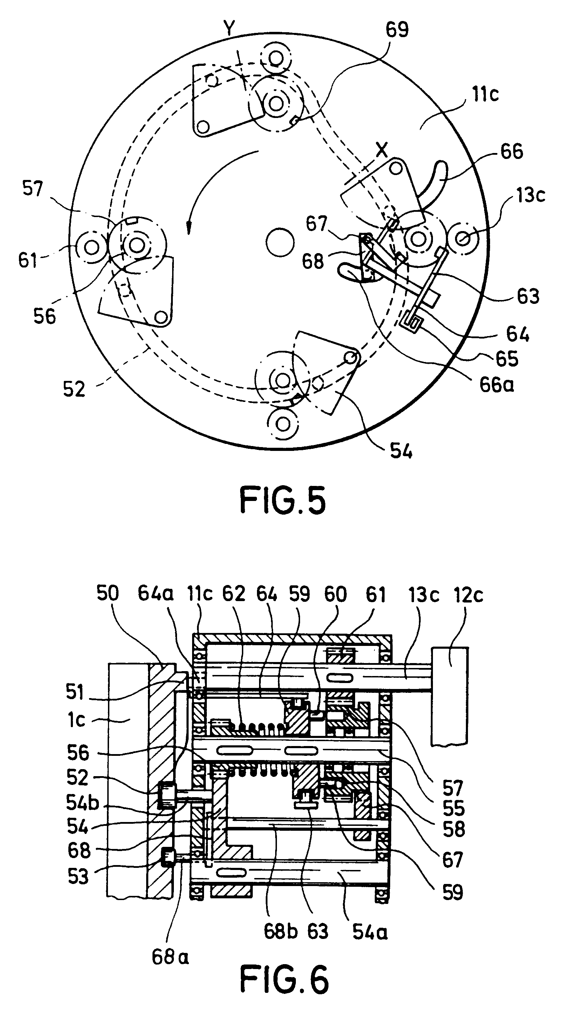

In den Fig. 5 und 6, in denen ein weiteres Beispiel dafür gezeigt ist, wie die einzelnen Greiferköpfe relativ zu dem Rotationselement 11c bewegt werden können, sind mit 61 Zahnräder bezeichnet, die mit Wellen 13c verbunden sind, wobei die Wellen 13c auf dem Rotationselement 11c gelagert sind und ihrerseits mit Lenkerelementen 12c verbunden sind. Bei dem vorliegenden Ausführungsbeispiel sind vier Zahnräder 61 und dementsprechend vier Lenkerelemente zum Haltern von vier Greiferköpfen (in Fig. 5 und 6 nicht gezeigt) vorgesehen. Die Zahnräder 61 stehen mit Zahnrädern 57 im Eingriff, die drehbar auf Wellen 55 gelagert sind, wobei die Wellen 55 ihrerseits drehbar auf dem Rotationselement 11c gelagert sind. Auf der Welle 55 benachbart zu dem Zahnrad 57 ist eine Kupplungsscheibe 59 auf der Welle 55 verschiebbar angeordnet. Die Kupplungsscheibe 59 weist vorstehende Bolzen 60 für den Eingriff in entsprechende Bohrungen 58 in dem Zahnrad 57 auf. Im Abstand zu der Kupplungsscheibe 59 ist auf der Welle 55 drehfest ein weiteres Zahnrad 56 angeordnet. Zwischen dem weiteren Zahnrad 56 und der Kupplungsscheibe 59 ist eine Schraubenfeder 62 vorgesehen, die mit ihren Enden an dem Zahnrad 56 bzw. der Kupplungsscheibe 59 anliegt. Das Zahnrad 56 steht mit einem Zahnsegment 54 im Eingriff, das drehfest auf einer Welle 54a angebracht ist, die ihrerseits drehbar auf dem Rotationselement 11c gelagert ist. Das Zahnsegment 54 weist ein Zapfenelement 54b auf, das durch eine Schlitzöffnung 66 in der Wand des im vorliegenden Ausführungsbeispiel als Hohlkörper ausgestalteten Rotationselements hindurchsteht und mit einer Rolle in eine Nutkurve 52 eingreift, die in einem ortsfesten, am Grundrahmen 1c der Vorrichtung befestigten Kurvenring 50 ausgebildet ist.

Mit 64 ist in den Fig. 5 und 6 ein Winkelhebel bezeichnet, der fest mit einer Schaltgabel 63 verbunden ist, die in eine in der Umfangsfläche der Kupplungsscheibe 59 ausgebildete Ringnut eingreift. Der Winkelhebel 64 ist mit seinem der Schaltgabel 63 abgewandten Ende in eine Öffnung 65 in der Wand des Rotationselements 11c geführt und weist an diesem Ende eine Rolle 64a auf, mit der er gegen eine auf dem ortsfesten Kurvenring 50 ausgebildete Hubkurve 51 anliegt.

Mit 68 ist ein Hebel bezeichnet, der an einem Ende ein vorstehendes Zapfenelement 68a aufweist, das durch eine Öffnung 66a in der Wand des Rotationselements 11c geführt ist und in eine weitere Kurvennut 53 eingreift, die in dem ortsfesten Kurvenring 50 ausgebildet ist. Der Hebel 68 ist an seinem anderen Ende mit einer Welle 68b fest verbunden, welche an ihren Enden auf dem Rotationselement 11c gelagert ist. An der Welle 68b ist ein weiterer Hebel 67 befestigt, der an seinem der Befestigungsstelle gegenüberliegenden Ende mit einem hakenartig vorstehenden Teil in eine Ausnehmung in dem Zahnrad 57 eingreifen kann.

Im Normalfall drückt die Feder 62 die Kupplungsscheibe 59 mit ihren vorstehenden Bolzen 60 in die Bohrungen 58 des Zahnrades 57, so daß durch das Zapfenenelement 54b auf die Zahnsegmente 54 übertragene Bewegungen über das Zahnrad 56 und die Welle 55 auf das Zahnrad 57, und damit von dem Zahnrad 57 über das Zahnrad 61 auf die Lankerelemente 12c übertragbar sind, so daß entsprechend dem Verlauf der Kurvennut 52 eine geeignete Bewegung der an den Lenkerelementen 12c aufgehängten Greiferköpfe möglich ist. Der beschriebene Kupplungs- und Sperrmechanismus ist vorgesehen, um zu gewährleisten, daß sich der Hebel 12c ständig in einer Richtung relativ zum Rotationselement 11c drehen kann und nicht, wie es die Vorrichtung der Fig. 5 und 6 ohne diese Einrichtungen sonst nur zulassen würde, oszillierende Bewegungen ausführen muß. An der mit X bezeichneten Stelle hat die Kurvenrolle des Zapfenelements 54b der Zahnsegmente 54 die innerste Position erreicht, und es wird über die Kurvennut 53 bewirkt, daß der Sperrhebel 67 in die Ausnehmungen 69 in dem Zahnrad 57 eingeführt wird. Über die Hubkurve 51 wird gleichzeitig bewirkt, daß die Bolzen 60 aus den Bohrungen 58 heraus bewegt werden. Bei stillstehendem Lenkerelement 12c wird die Rolle des Zahnsegments 54 nun in ihre äußerste Position verschwenkt. An der mit Y bezeichneten Stelle hat die Kurvenrolle des Zahnsegments ihre äußerste Positon erreicht und die Bolzen 60 werden wieder in die Bohrungen 58 eingeführt, und der Sperrhebel 67 wird aus der Ausnehmung 69 heraus geschwenkt, so daß die Relativbewegung des Hebels 12c relativ zum Rotationselement 11c vom Punkt Y an wieder über die Kurvennut 52 gesteuert wird.

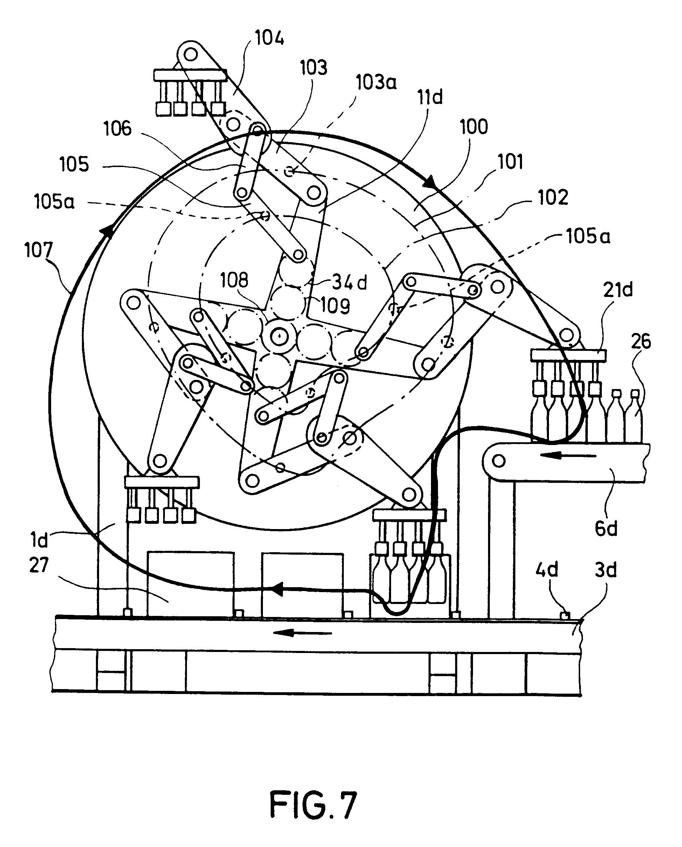

Bei dem in der Fig. 7 dargestellten Ausführungsbeispiel sind gleiche oder gleichwirkende Teile wie bei den vorangehend beschriebenen Ausführungsbeispielen mit der gleichen, jedoch mit dem Index d versehenen Bezugszahl bezeichnet. Bei diesem Ausführungsbeispiel ist das Rotationselement 11d kreuzförmig ausgebildet und ein wesentlicher Unterschied zu den vorangehend beschriebenen Ausführungsbeispielen besteht darin, daß als Aufhängung für die Greiferköpfe zwei miteinander verbundene Lankerelemente 103 und 104 verwendet werden. Das innere Lankerelement 103 ist gegen das Rotationselement 11d verschwenkbar, während das äußere Lenkerelement 104 seinerseits gegen das innere Lenkerelement 103 verschwenkbar ist. Darüber hinaus sind miteinander verschwenkbar verbundene Hilfslenker 105 und 106 vorgesehen, wobei der Hilfslenker 105 verschwenkbar mit dem Rotationselement 11d und der Hilfslenker 106 verschwenkbar mit dem Außenlenker 104 verbunden ist, wobei der Anlenkpunkt im vorliegenden Ausführungsbeispiel radial vor dem Anlenkpunkt des Innenlenkers 103 an den Außenlenker 104 angeordnet ist. Der Innenlenker 103 weist ein Nockenelement 103a auf, das in eine Kurvennut 101 eingreift, die in einer ortsfesten, mit dem Grundrahmen 1d verbundenden Kurvenscheibe 100 ausgebildet ist. Der Hilfslenker 105 ist mit einem Nockenelement 105a versehen, das in eine zweite in der Kurvenscheibe 100 ausgebildete Kurvennut 102 eingreift.

Bei einer Drehung des Rotationselements 11d werden die Nockenelemente 103a und 105a in den Nuten 101 und 102 zwangsgeführt, wodurch eine zusätzliche Bewegung in einer senkrechten Ebene der Greiferköpfe 21d relativ zur Drehung des Rotationselements 11d und damit eine zum Verpacken geeignete Kurvenbahn 107 erreicht wird. Bei dem in der Fig. 7 gezeigten Ausführungsbeispiel bestehen in bezug auf diese Zusatzbewegung der Greiferköpfe im Vergleich zu den vorangehend beschriebenen Ausführungsbeispielen mehr Möglichkeiten, so daß eine in bezug auf räumliche Anpassungsmöglichkeiten sowie geeignete Geschwindigkeits- und Beschleunigungswerte noch weiter verbesserte Kurvenbahn erzielt werden kann.

Auch beim Ausführungsbeispiel nach Fig. 7 ist eine Parallelführung der Greiferköpfe 21d durch ein ortsfestes Ritzel und von diesem angetriebene Zahnriemen ähnlich Fig. 2 möglich. Es ist lediglich ein zusätzlicher Zahnriemen vom Anlenkpunkt des Außenlenkers 104 am Innenlenker 103 zum Anlenkpunkt des Greiferkopfs 21d am Außenlenker 104 mit zwei zusätzlichen Ritzeln erforderlich. Eine besonders kompakte Bauweise der vier Riementriebe wird möglich, wenn ein zentrales, feststehendes Sonnenrad 108 konzentrisch zur Drehachse des Rotationselements 11d vorgesehen ist, in das vier in den Armen des Rotationselements 11d gelagerte Planetenräder 109 eingreifen, welche jeweils das Antriebsritzel 34d der Riementriebe zu den Greiferköpfen 21d in Rotation versetzt. In Fig. 7 ist dies strichpunktiert angedeutet.

Die vorbeschriebenen Ausführungsbeispiele zeigen jeweils Vorrichtungen zum Einpacken von Flaschen 26 in Trägerkästen 27. Durch Umkehrung der Drehrichtung der Rotationselemente 11, 11c, 11d, der Förderer 6, 6d für die Flaschen 26 und der Förderer 3, 3d für die Trägerkästen 27 entstehen aus diesen Vorrichtungen Vorrichtungen zum Auspacken der Flaschen 26 aus den Trägerkästen 27. Bei der Vorrichtung nach Fig. 7 sind außerdem die Lenker 103 bis 106 spiegelbildlich am Rotationselement 11d anzulenken, um die günstigen Eingriffsbedingungen der Rollen 103a, 105a in den Kurvenbahnen 101, 102 aufrechtzuerhalten.

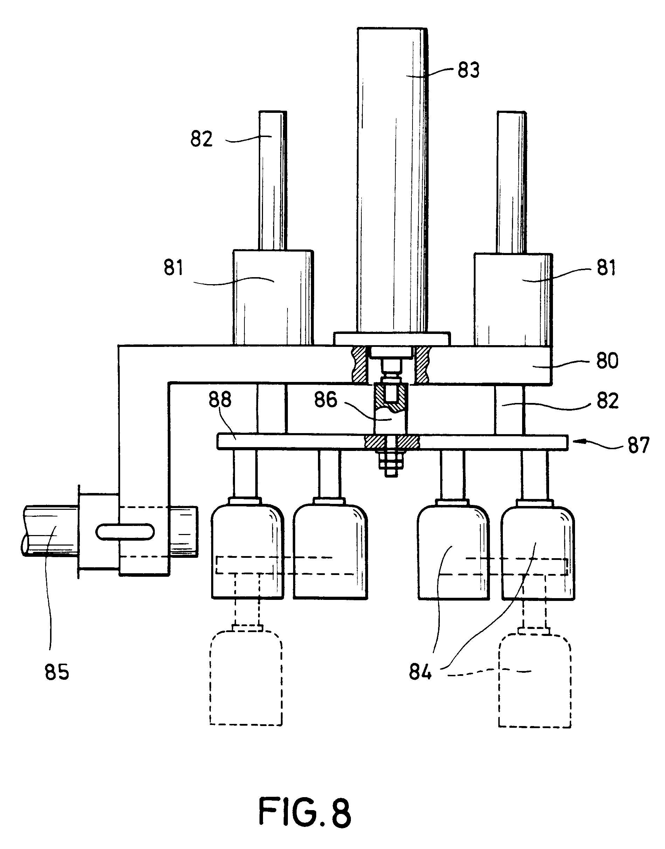

Um die Bahnkurve noch weiter geeignet variieren zu können, kann ein zusätzlich bewegbarer Greiferkopf, wie er in der Fig. 8 gezeigt ist, verwendet werden. In der Fig. 8 ist mit 80 eine Trägerplatte bezeichnet, die über eine Welle 85 mit einer Aufhängung entsprechend den vorangehend beschriebenen Ausführungsbeispielen verbunden sein kann. Die Trägerplatte 80 weist, im vorliegenden Ausführungsbeispiel, zwei Führungsbuchsen 81 auf, in die entsprechende, mit einem Greiferkopf 87 verbundene Führungsstangen 82 eingreifen. Auf der Trägerplatte 80 ist ferner ein Pneumatikzylinder 83 angeordnet, dessen Kolben über ein Verbindungsstück 86 mit einer Trägerplatte 88 des Greiferkopfes 87 verbunden ist. An der Trägerplatte 88 des Greiferkopfes 87 sind tulpenartige Greifelemente 84 angebracht.

Im Betrieb der Packvorrichtung kann eine weitere Beeinflussung der Bahnkurve des Greiferkopfes 87 erfolgen, indem insbesondere in Phasen des Zugriffs auf oder der Lösung von Behältergruppen durch den Pneumatikzylinder 83 zusätzlich eine Bewegung des Greiferkopfes 87 senkrecht zu der Trägerplatte 80 und damit eine Vertikalverschiebung des während seines Umlaufs ständig waagerecht gehaltenen Greiferkopfes, die ausreicht, um ein sicheres Ergreifen der Behälter bzw. schonendes Absetzen zu gewährleisten, bewirkt wird. Durch die gestrichelten Linien ist in Fig. 8 eine abgesenkte Stellung des Greiferkopfes 87 angedeutet. Der Pneumatikzylinder zur Erzeugung der zusätzlichen Bewegung des Greiferkopfes kann durch Sensoren gesteuert werden, welche die jeweilige Winkelstellung des Rotationselements, und damit auch die jeweilige Stellung der Greiferköpfe erfassen.

Im obigen Ausführungsbeispiel ist die Verschiebung als um eine vertikale Richtung erfolgend beschrieben. Es ist jedoch auch möglich, diese Verschiebung in horizontaler Richtung mit denselben Mitteln stattfinden zu lassen oder auch eine geneigte Bewegung, also eine Kippbewegung um eine Horizontalachse durchzuführen.

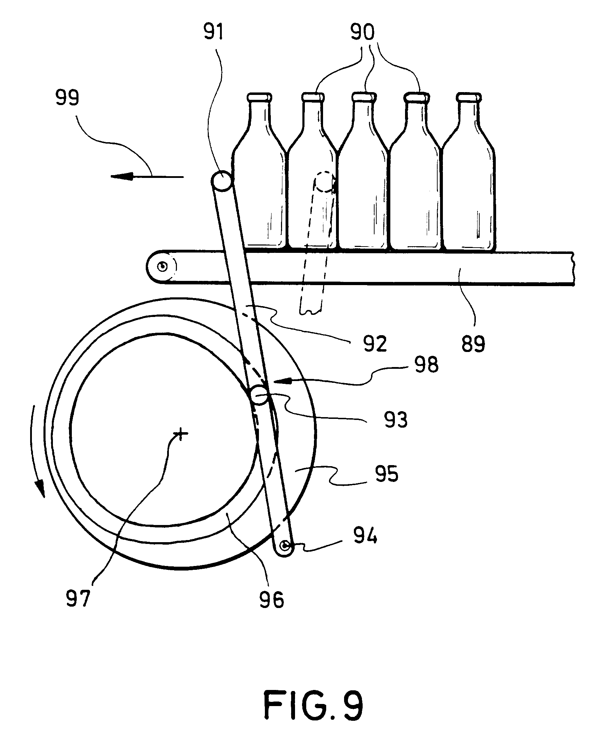

In der Fig. 9 ist mit dem Bezugszeichen 89 eine synchron zum Rotationselement angetriebene Fördereinrichtung mit Scharnierketten bezeichnet, auf der zu verpackende Flaschen 90 in mehreren parallelen Reihen entsprechend der Richtung des Pfeils 99 gegen eine Anschlagstange 91 angefördert werden. Die Anschlagstange 91 ist als Teil eines um eine Drehachse 94 schwenkbaren Schwenkbügels 98 mit Bügelschenkeln 92 vorgesehen. An wenigstens einem der Bügelschenkel 92 ist ein Zapfenelement 93 angebracht, welches in eine Nutkurve 96 einer um eine Drehachse 97 synchron zum Rotationselement drehbaren Drehscheibe 95 eingreift.

Im Verpackungsbetrieb stoßen die angeförderten Flaschen 90 etwa in der durch gestrichelte Linien angedeuteten Stellung des Schwenkbügels 98 gegen die Anschlagstange 91 an, wobei zu diesem Zeitpunkt, gesteuert über die Drehbewegung der Drehscheibe 95 mit der Nutkurve 96 die Geschwindigkeit der Anschlagstange 91 etwas geringer als die Geschwindigkeit der angeförderten Flaschen ist, so daß ein verhältnismäßig sanfter, die Flaschen schonender Anschlag erfolgt. Die Anschlagstange 91 bewegt sich danach in Richtung des Pfeiles 99 unter der Drehung der Drehscheibe 95 mit gleichbleibender Geschwindigkeit weiter. Während dieser Phase erfolgt die Förderung durch die Fördereinrichtung 89 weiter mit konstanter, etwas höherer Geschwindigkeit, so daß sich während dieser Phase die Flaschen 90 zueinander, indem sie in Förderrichtung gegenseitig zum Anschlag kommen, ausrichten. Für die Ausrichtung der Flaschen quer zu den Reihen sorgen in der Fig. 9 nicht gezeigte Seitenführungen. Die durch gegenseitigen Anschlag zueinander ausgerichteten Flaschen können dann durch einen Greifer, welcher entsprechend angeordnete Greifertulpen aufweist, aufgenommen werden. Die Bewegung der Drehscheibe 95 ist entsprechend der Bewegung der Greiferköpfe so gesteuert, daß im Moment des Zugriffs die Anschlagstange 91, und damit die aufzunehmende Flaschengruppe, eine Horizontalgeschwindigkeit aufweist, die der Horizontalgeschwindigkeit des Greiferkopfes angepaßt ist. Nach dem Ergreifen der Flaschen durch den Greiferkopf kann die Anschlagstange zur Staudruckentlastung von den Flaschen weg beschleunigt und danach wieder in die Anschlagstellung gebracht werden. Auch die in der Fig. 9 gezeigte Einrichtung trägt zu einer schonenden und verhältnismäßig geräuscharmen Behandlung der Flaschen beim Verpacken bei.

## Patentansprüche

1. Vorrichtung zum gruppenweisen Ein- oder Auspacken von Behältern in bzw. aus Trägerkästen, mit einem um eine im wesentlichen horizontale Achse drehbaren Rotationselement (11), an dem an drehachsenfernen Stellen Behältergreiferköpfe (21) zum wiederholten Durchlaufen einer geschlossenen, eine Zugriffsposition und eine Grifflöseposition enthaltenden Bahn angebracht sind, **dadurch gekennzeichnet**, daß die Behältergreiferköpfe (21) mit dem Rotationselement (11) jeweils über eine Relativbewegungen des Greiferkopfes gegen das Rotationselement in einer im wesentlichen vertikalen Ebene gestattende Aufhängung verbunden sind und eine Antriebs- und Steuereinrichtung zum Bewegen der Greiferköpfe relativ zum Rotationselement unter Erzeugung der Bahn in einer gewünschten Form vorgesehen ist.

2. Vorrichtung nach Anspruch 1, **dadurch gekennzeichnet**, daß die Antriebs- und Steuereinrichtung den einzelnen Aufhängungen zugeordnete Antriebselemente umfaßt.

3. Vorrichtung nach Anspruch 2, **dadurch gekennzeichnet**, daß die Antriebselemente auf dem Rotationselement montiert sind.

4. Vorrichtung nach Anspruch 2 oder 3, **dadurch gekennzeichnet**, daß die Antriebselemente jeweils einen Motor oder/und eine Getriebeeinrichtung umfassen.

5. Vorrichtung nach einem der Ansprüche 2 bis 4, **dadurch gekennzeichnet**, daß die Antriebselemente durch Drehung des Rotationselementes betätigbar sind.

6. Vorrichtung nach einem der Ansprüche 2 bis 5, **dadurch** **gekennzeichnet**, daß die Antriebselemente in wenigstens eine Steuerbahn eingreifende Betätigungselemente aufweisen.

7. Vorrichtung nach Anspruch 6, **dadurch gekennzeichnet**, daß die Steuerbahn gegen das Rotationselement feststehend ist.

8. Vorrichtung nach Anspruch 6 oder 7, **dadurch gekennzeichnet**, daß die Steuerbahn eine Zahnbahn oder/und Kurvenführungsbahn umfaßt.

9. Vorrichtung nach einem der Ansprüche 6 bis 8, **dadurch gekennzeichnet**, daß die Betätigungselemente einen Rollenstern oder/und ein Nockenelement umfassen.

10. Vorrichtung nach Anspruch 9, **dadurch gekennzeichnet**, daß der Rollenstern mit einer Getriebewelle verbunden ist.

11. Vorrichtung nach Anspruch 9 oder 10, **dadurch gekennzeichnet**, daß das Nockenelement mit einer Welle eines Ausgleichsgetriebes verbunden ist.

12. Vorrichtung nach einem der Ansprüche 1 bis 11, **dadurch gekennzeichnet**, daß die Aufhängung ein gegen das Rotationselement und den Greiferkopf verschwenkbares Lenkerelement aufweist.

13. Vorrichtung nach Anspruch 12, **dadurch gekennzeichnet**, daß die Schwenkachse des Lenkerelementes zum Verschwenken gegen das Rotationselement mit der Antriebs- und Steuereinrichtung verbunden ist.

14. Vorrichtung nach einem der Ansprüche 1 bis 11, **dadurch gekennzeichnet**, daß die Aufhängung ein erstes gegen das Rotationselement verschwenkbares Lenkerelement und ein zweites gegen das erste und den Greiferkopf verschwenkbares Lenkerelement aufweist.

15. Vorrichtung nach Anspruch 14, **dadurch gekennzeichnet**, daß Antriebselemente zur individuellen Bewegung der beiden Lenkerelemente vorgesehen sind.

16. Vorrichtung nach Anspruch 15, **dadurch gekennzeichne**t, daß das erste Lenkerelement mit einem in eine Führungsbahn eingreifenden Nockenelement versehen ist.

17. Vorrichtung nach Anspruch 16, **dadurch gekennzeichnet**, daß das zweite Lenkerelement über ein zweigliedriges Lenkergestänge mit dem Rotationselement verbunden und das mit dem Rotationselement verbundene Gestängeglied mit einem in eine weitere Kurvenführungsbahn eingreifenden Nockenelement versehen ist.

18. Vorrichtung nach einem der Ansprüche 1 bis 17, **dadurch gekennzeichnet**, daß das Rotationselement (11) in einer Richtung drehbar ist.

19. Vorrichtung nach einem der Ansprüche 1 bis 18, **dadurch gekennzeichnet**, daß das Rotationselement (11) als eine Drehscheibe (11) ausgebildet ist.

20. Vorrichtung nach einem der Ansprüche 1 bis 19, **dadurch gekennzeichnet**, daß in dem Rotationselement (11) ein Innenraum für die Aufnahme der Antriebs- und Steuereinrichtung oder wenigstens für die Aufnahme von wesentlichen Teilen der Antriebselemente ausgebildet ist.

21. Vorrichtung nach einem der Ansprüche 1 bis 20, **dadurch gekennzeichnet**, daß die Behältergreiferköpfe (21) in der Art einer Gondel aufgehängt sind.

22. Vorrichtung nach einem der Ansprüche 1 bis 21, **dadurch gekennzeichnet**, daß eine Einrichtung zur Fixierung der Behältergreiferköpfe (21) in einer horizontalen Ausrichtung vorgesehen ist.

23. Vorrichtung nach einem der Ansprüche 1 bis 22, **dadurch gekennzeichnet**, daß drei oder vier Greiferköpfe (21) vorgesehen sind.

24. Vorrichtung nach einem der Ansprüche 1 bis 23, **dadurch gekennzeichnet**, daß die Aufhängungspunkte der Aufhängungen an dem Rotationselement (11) zueinander den gleichen Winkelabstand aufweisen.

25. Vorrichtung nach einem der Ansprüche 1 bis 24, **dadurch gekennzeichnet**, daß die Aufhängungspunkte der Aufhängungen an dem Rotationselement (11) im gleichen Abstand zur Drehachse des Rotationselements angeordnet sind.

26. Vorrichtung nach einem der Ansprüche 1 bis 25, **dadurch gekennzeichnet**, daß die Greiferköpfe mit ihrer Aufhängung jeweils über eine Einrichtung für die Erzeugung einer Hubbewegung des Greiferkopfes relativ zu der Aufhängung verbunden sind.

27. Vorrichtung nach Anspruch 26, **dadurch gekennzeichnet**, daß die Einrichtung für die Erzeugung einer Hubbewegung eine pneumatische Antriebseinrichtung (83) für den Greiferkopf (87) umfaßt.

28. Vorrichtung nach Anspruch 26 oder 27, **dadurch gekennzeichnet**, daß die Einrichtung für die Erzeugung einer Hubbewegung eine Trägereinrichtung (80) für Führungsbuchsen (81) zur Führung von mit dem Greiferkopf (87) verbundenen Führungsstangen (82) und für einen mit dem Greiferkopf (87) verbundenen Pneumatikzylinder (83) zur Bewegung des Greiferkopfs relativ zu der Trägereinrichtung (80) umfaßt.

29. Vorrichtung nach einem der Ansprüche 26 bis 28, **dadurch gekennzeichnet**, daß die Einrichtung für die Erzeugung einer Hubbewegung des Greiferkopfes über mit dem Rotationselement verbundene, die Winkelstellung des Rotationselements und damit die Stellung des Greiferkopfes erfassende Sensoren steuerbar ist.

30. Vorrichtung nach einem der Ansprüche 1 bis 29, **dadurch gekennzeichnet**, daß eine Anschlageinrichtung zur Ausrichtung von der Vorrichtung in wenigstens einer Reihe zuführbaren Behältern zu einer durch einen Greiferkopf in der Zugriffsposition aufnehmbaren Behältergruppe vorgesehen ist.

31. Vorrichtung nach Anspruch 30, **dadurch gekennzeichnet**, daß die Anschlageinrichtung eine in Bewegungsrichtung der Behälter mit etwas geringerer Geschwindigkeit als die Behälterfördergeschwindigkeit bewegbare Anschlagstange (91) umfaßt.

32. Vorrichtung nach Anspruch 31, **dadurch gekennzeichnet**, daß ein die Anschlagstange (91) umfassender Schwenkbügel (98) mit einem Eingriffselement (93) für den Eingriff in eine Nutkurve (96) in einer Drehscheibe (95) vorgesehen ist.

33. Vorrichtung nach Anspruch 32, **dadurch gekennzeichnet**, daß die Drehung der Drehscheibe (95) mit der Bewegung der einzelnen Greiferköpfe synchronisiert ist.

## Claims

1. Device for packing or unpacking groups of containers into or from carrying crates, comprising a rotation element (11) which is rotatable about a substantially horizontal axis and on which container gripper heads (21) are mounted at points remote from the axis of rotation for repeatedly traversing a closed-loop track including a gripping position and a release position, characterised in that the container gripper heads (21) are each connected to the rotation element (11) via a suspension means allowing for movements of the gripper head relative to the rotation element in a substantially vertical plane, and a drive and control means is provided for moving the gripper heads relative to the rotation element so as to produce the track in a desired configuration.

2. Device according to claim 1, characterised in that the drive and control means comprises drive elements associated with the individual suspension means.

3. Device according to claim 2, characterised in that the drive elements are mounted on the rotation element.

4. Device according to claim 2 or claim 3, characterised in that the drive elements each comprise a motor and/or a gear mechanism.

5. Device according to one of claims 2 to 4, characterised in that the drive elements can be actuated by rotation of the rotation element.

6. Device according to one of claims 2 to 5, characterised in that the drive elements have actuating elements engaging at least one control track.

7. Device according to claim 6, characterised in that the control track is stationary relative to the rotation element.

8. Device according to claim 6 or claim 7, characterised in that the control track comprises a toothed track and/or a cam guide track.

9. Device according to one of claims 6 to 8, characterised in that the actuating elements comprises a roller star and/or a cam element.

10. Device according to claim 9, characterised in that the roller star is connected to a gear shaft.

11. Device according to claim 9 or claim 10, characterised in that the cam element is connected to a shaft of a differential gear mechanism.

12. Device according to one of claims 1 to 11, characterised in that the suspension means has a pivoted arm which is pivotable relative to the rotation element and the gripper head.

13. Device according to claim 12, characterised in that the pivot axis of the pivoted arm is connected to the drive and control means for pivoting relative to the rotation element.

14. Device according to one of claims 1 to 11, characterised in that the suspension means has a first pivoted arm which is pivotable relative to the rotation element and a second pivoted arm which is pivotable relative to the first pivoted arm and the gripper head.

15. Device according to claim 14, characterised in that drive elements are provided for the individual movement of the two pivoted arms.

16. Device according to claim 15, characterised in that the first pivoted arm is provided with a cam element engaging a guide track.

17. Device according to claim 16, characterised in that the second pivoted arm is connected to the rotation element via a two-membered linkage and the linkage member connected to the rotation element is provided with a cam element engaging a further cam guide track.

18. Device according to one of claims 1 to 17, characterised in that the rotation element (11) is rotatable in one direction.

19. Device according to one of claims 1 to 18, characterised in that the rotation element (11) is in the form of a rotary disc (11).

20. Device according to one of claims 1 to 19, characterised in that an inner space is formed in the rotation element (11) for accommodating the drive and control means or at least for accommodating essential parts of the drive elements.

21. Device according to one of claims 1 to 20, characterised in that the container gripper heads (21) are suspended like a gondola.

22. Device according to one of claims 1 to 21, characterised in that a means is provided for keeping the container gripper heads (21) in a horizontal alignment.

23. Device according to one of claims 1 to 22, characterised in that three or four gripper heads (21) are provided.

24. Device according to one of claims 1 to 23, characterised in that the suspension points of the suspension means on the rotation element (11) are at the same angular distance from one another.

25. Device according to one of claims 1 to 24, characterised in that the suspension points of the suspension means on the rotation element (11) are arranged at the same distance from the axis of rotation of the rotation element.

26. Device according to one of claims 1 to 25, characterised in that the gripper heads are each connected to their suspension means via a means for producing a lifting movement of the gripper head relative to the suspension means.

27. Device according to claim 26, characterised in that the means for producing a lifting movement comprises a pneumatic drive means (83) for the gripper head (87).

28. Device according to claim 26 or claim 27, characterised in that the means for producing a lifting movement comprises a supporting means (80) for guide bushes (81) for guiding guide rods (82) connected to the gripper head (87) and for a pneumatic cylinder (83) connected to the gripper head (87) for moving the gripper head relative to the supporting means (80).

29. Device according to one of claims 26 to 28, characterised in that the means for producing a lifting movement of the gripper head can be controlled via sensors connected to the rotation element and detecting the angular position of the rotation element and thus the position of the gripper head.

30. Device according to one of claims 1 to 29, characterised in that a stop means is provided for aligning containers which can be supplied to the device in at least one row relative to a group of containers which can be picked up by a gripper head in the gripping position.

31. Device according to claim 30, characterised in that the stop means comprises a stop bar (91) which is movable in the direction of movement of the containers at a slightly lower speed than the container conveying speed.

32. Device according to claim 31, characterised in that a pivotable bracket (98) comprising the stop bar (91) is provided with an engagement element (93) for engaging a face cam (96) in a rotary disc (95).

33. Device according to claim 32, characterised in that the rotation of the rotary disc (95) is synchronised with the movement of the individual gripper heads.

## Revendications

1. Dispositif pour l'emballage ou le déballage par groupes de récipients dans et respectivement à partir de casiers de transport, comprenant un élément rotatif (11) qui tourne autour d'un axe sensiblement horizontal et porte, à des endroits éloignés de l'axe de rotation, des têtes de préhension de récipients (21) pour le passage répété d'une trajectoire sans fin avec une position de prise et une position de desserrage, **caractérisé en ce** que les têtes de préhension de récipients (21) sont rattachées à chaque fois à l'élément rotatif (11) par l'intermédiaire d'une suspension qui permet des mouvements relatifs de la tête preneuse par rapport à l'élément rotatif dans un plan sensiblement vertical, et qu'un système d'entraînement et de commande est prévu pour faire pivoter les têtes preneuses par rapport à l'élément rotatif, en produisant une trajectoire d'une forme désirée.

2. Dispositif selon la revendication 1, caractérisé en ce que le système d'entraînement et de commande comprend des éléments d'entraînement associés aux différentes suspensions.

3. Dispositif selon la revendication 2, caractérisé en ce que les éléments d'entraînement sont montés sur l'élément rotatif.

4. Dispositif selon l'une des revendications 2 ou 3, caractérisé en ce que les éléments d'entraînement comprennent à chaque fois un moteur et/ou un système d'engrenages.

5. Dispositif selon l'une quelconque des revendications 2 à 4, caractérisé en ce que les éléments d'entraînement peuvent être actionnés par la rotation de l'élément rotatif.

6. Dispositif selon l'une quelconque des revendications 2 à 5 caractérisé en ce que les éléments d'entraînement comprennent au moins des éléments de manoeuvre qui s'engagent dans une trajectoire de commande.

7. Dispositif selon la revendication 6, caractérisé en ce que la trajectoire de commande est fixe par rapport à l'élément rotatif.

8. Dispositif selon l'une des revendications 6 ou 7, caractérisé en ce que la trajectoire de commande est une voie à crémaillère et/ou une voie de guidage incurvée.

9. Dispositif selon l'une quelconque des revendications 6 à 8, caractérisé en ce que les éléments de manoeuvre comprennent une étoile à galets et/ou un élément de came.

10. Dispositif selon la revendication 9, caractérisé en ce que l'étoile à galets est couplée avec un arbre de transmission.

11. Dispositif selon l'une des revendications 9 ou 10, caractérisé en ce que l'élément de came est couplé avec un arbre d'un engrenage compensateur.

12. Dispositif selon l'une quelconque des revendications 1 à 11, caractérisé en ce que la suspension comprend un élément de bielle qui peut pivoter par rapport à l'élément rotatif et à la tête preneuse.

13. Dispositif selon la revendication 12, caractérisé en ce que, pour le pivotement par rapport à l'élément rotatif, l'axe de pivotement de l'élément de bielle est raccordé au dispositif d'entraînement et de commande.

14. Dispositif selon l'une quelconque des revendications 1 à 11, caractérisé en ce que la suspension comprend un premier élément de bielle pivotant par rapport à l'élément rotatif et un second élément de bielle pivotant par rapport au premier élément de bielle et à la tête preneuse.

15. Dispositif selon la revendication 14, caractérisé en ce qu'il comprend des éléments d'entraînement pour le mouvement individuel des deux éléments de bielle.

16. Dispositif selon la revendication 15, caractérisé en ce que le premier élément de bielle est muni d'un élément de came qui s'engage dans une voie de guidage.

17. Dispositif selon la revendication 16, caractérisé en ce que le second élément de bielle est couplé avec l'élément rotatif par l'intermédiaire d'un système de biellage en deux parties, et que l'élément du système de biellage raccordé à l'élément rotatif comporte un élément de came qui s'engage dans une autre voie de guidage incurvée.

18. Dispositif selon l'une quelconque des revendications 1 à 17, caractérisé en ce que l'élément rotatif (11) peut tourner dans une direction.

19. Dispositif selon l'une quelconque des revendications 1 à 18, caractérisé en ce que l'élément rotatif (11) est conformé en plateau tournant (11).

20. Dispositif selon l'une quelconque des revendications 1 à 19, caractérisé en ce que dans l'élément rotatif (11) est ménagé un espace intérieur pour la réception du dispositif d'entraînement et de commande ou du moins pour la réception de parties essentielles des éléments d'entraînement.

21. Dispositif selon l'une quelconque des revendications 1 à 20, caractérisé en ce que les têtes de préhension de récipients (21) sont suspendues à la manière d'une nacelle.

22. Dispositif selon l'une quelconque des revendications 1 à 21, caractérisé en ce qu'il comprend un dispositif pour la fixation des têtes de préhension de récipients (21) dans un alignement horizontal.

23. Dispositif selon l'une quelconque des revendications 1 à 22, caractérisé en ce qu'il comprend trois ou quatre tête preneuses (21).

24. Dispositif selon l'une quelconque des revendications 1 à 23, caractérisé en ce que les points d'accrochage des suspensions sur l'élément rotatif (11) présentent entre eux la même distance angulaire.

25. Dispositif selon l'une quelconque des revendications 1 à 24, caractérisé en ce que les points d'accrochage des suspensions sur l'élément rotatif (11) se situent à la même distance par rapport à l'axe de rotation de l'élément rotatif.

26. Dispositif selon l'une quelconque des revendications 1 à 25, caractérisé en ce que les têtes preneuses sont à chaque fois rattachées à leur suspension par l'intermédiaire d'un système destiné à produire un mouvement de levage de la tête preneuse par rapport à la suspension.

27. Dispositif selon la revendication 26, caractérisé en ce que le système pour la production d'un mouvement de levage comprend un dispositif d'entraînement pneumatique (83) pour la tête preneuse (87).

28. Dispositif selon l'une des revendications 26 ou 27, caractérisé en ce que le système pour la production d'un mouvement de levage comprend un système de support (80) pour des douilles de guidage (81) destinées à guider des barres conductrices (82) couplées avec la tête preneuse (87) et pour un vérin pneumatique (83) couplé avec la tête preneuse (87) et destiné à déplacer ladite tête preneuse par rapport au système de support (80).

29. Dispositif selon l'une quelconque des revendications 26 à 28, caractérisé en ce que le système pour la production d'un mouvement de levage de la tête preneuse peut être commandé par l'intermédiaire de détecteurs couplés avec l'élément rotatif et détectant la position angulaire de l'élément rotatif et donc la position de la tête preneuse.

30. Dispositif selon l'une des revendications 1 à 29, caractérisé en ce qu'il comprend un dispositif de butée pour aligner des récipients qui peuvent être amenés par le dispositif en au moins une rangée, de façon à former un groupe de récipients lequel peut être saisi par la tête preneuse dans la position de prise.

31. Dispositif selon la revendication 30, caractérisé en ce que le dispositif de butée comprend une tige de butée (91) déplaçable dans la direction de mouvement des récipients à une vitesse légèrement plus faible que la vitesse de transport des récipients.

32. Dispositif selon la revendication 31, caractérisé en ce qu'il comprend un étrier pivotant (98) muni de la tige de butée (91) et d'un élément de prise (93) pour l'engagement dans une came à rainure (96) ménagée dans un plateau tournant (95).

33. Dispositif selon la revendication 32, caractérisé en ce que la rotation du plateau tournant (95) est synchronisée avec le mouvement des différentes têtes preneuses.
